(19) Europäisches Patentamt

European Patent Office

Office européen des brevets

(11) **EP 0 569 814 B1**

(12) **EUROPÄISCHE PATENTSCHRIFT**

(45) Veröffentlichungstag und Bekanntmachung des Hinweises auf die Patenterteilung:
**18.03.1998 Patentblatt 1998/12**

(51) Int Cl.6: **H01J 61/33**, H01J 61/72

(21) Anmeldenummer: **93107162.5**

(22) Anmeldetag: **03.05.1993**

(54) **Niederdruckentladungslampe**

Low pressure discharge tube

Tube à décharge à basse pression

(84) Benannte Vertragsstaaten:
**DE FR GB IT SE**

(30) Priorität: **13.05.1992 DE 4215674**

(43) Veröffentlichungstag der Anmeldung:
**18.11.1993 Patentblatt 1993/46**

(73) Patentinhaber: **Patent-Treuhand-Gesellschaft für elektrische Glühlampen mbH 81543 München (DE)**

(72) Erfinder:
- **Schafnitzel, Hubert W-8901 Königsbrunn (DE)**
- **Hien, Sigfried W-8904 Friedberg (DE)**
- **Schmidt, Hans W-8900 Augsburg (DE)**

(56) Entgegenhaltungen:
EP-A- 0 061 758    EP-A- 0 331 660
EP-A- 0 373 567    EP-A- 0 572 835
DE-A- 4 012 588    US-A- 4 977 349

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Niederdruckentladungslampe gemäß dem Oberbegriff des Anspruchs 1.

Niederdruckentladungslampen dieser Art sind aus der EP-PS 0 061 758 und der EP-PS 0 143 419 bekannt und wurden bisher aufgrund ihrer kompakten Abmessungen hauptsächlich in Innenleuchten eingesetzt. Für den Innenraumbetrieb weisen die Lampen daher ein Lichtausbeutemaximum bei 25°C auf, einer Temperatur, wie sie im Mittel beim Betrieb dieser Lampen in Innenleuchten vorherrscht. Das Lichtausbeutemaximum wird durch die Dichte und den Dampfdruck des Quecksilbers an der kältesten Stelle im Entladungsgefäß festgelegt. Damit sich im Entladungsgefäß die entsprechende Dichte bzw. der richtige Dampfdruck einstellen kann, haben daher die Entladungsgefäße im Bereich der 180°-Biegungen rechtwinklige Ecken, die nicht vom Entladungsbogen erfaßt werden und in denen das Quecksilber kondensieren kann.

Neuerdings werden diese Niederdruckentladungslampen aufgrund ihres sparsamen Stromverbrauchs verstärkt auch in Außenleuchten eingesetzt, wobei jedoch, aufgrund der dort herrschenden niedrigen Umgebungstemperaturen von ca. 10°C (im Jahresmittel), keine optimalen Lichtausbeutewerte erzielt werden können.

Aufgabe der Erfindung ist es eine Niederdruckentladungslampe zu schaffen, die bei niedrigen Umgebungstemperaturen optimale Lichtausbeutewerte aufweist.

Die Aufgabe wird durch die kennzeichnenden Merkmale des Anspruchs 1 gelöst. Ein weiteres vorteilhaftes Merkmal ist dem Unteranspruch zu entnehmen.

Durch die Verengung des Innenrohrdurchmessers des Entladungsgefäßes im Bereich der 180°-Biegung zu einer Ellipse mit den in Anspruch 1 aufgeführten Verhältnissen für die beiden Achsen wird die Kühlstelle näher an den Entladungsbogen herangebracht. Sie würde somit - bei Innenraum-Umgebungstemperatur - eine zu hohe Temperatur für eine maximale Lichtausbeute erhalten, die jedoch durch die niedrige Umgebungstemperatur in Außenleuchten wieder auf die richtige Temperatur abgesenkt wird.

Eine weitere Verbesserung im Hinblick auf die Anwendung der Niederdruckentladungslampe bei niedrigen Umgebungstemperaturen läßt sich durch eine Verdickung der Entladungsgefäßwand im Bereich der äußeren Mantelfläche der 180 °-Biegung erreichen. Durch die Verdickung der Wand wird die Isolation verbessert, so daß auch sehr tiefe Umgebungstemperaturen keinen allzu großen Einfluß auf die Lichtausbeute haben. Untersuchungen zeigten, daß - je nach Lampentyp - optimale Ergebnisse erzielt werden, wenn die Wanddicke zwischen dem 1,5-fachen und dem 2,5-fachen der Wanddicke der geraden Längsrohrabschnitte der U-förmigen Rohre des Entladungsgefäßes liegt.

Aus der US-A-4 977 349 ist eine Niederdruckentladungslampe mit einer Amalgam-Füllung und einem reduzierten Rohrdurchmesser in der 180°-Biegung des Entladungsgefäßes bekannt. Durch diese Reduzierung wird ein Niederschlag des Amalgams in den Ecken der Biegung verhindert und somit die Lichtabgabe in diesem Bereich erhöht.

Die Erfindung ist anhand der nachfolgenden Figuren näher veranschaulicht:

Figur 1 zeigt in Seitenansicht eine erfindungsgemäße Niederdruckentladungslampe mit einem Sockel

Figur 2 zeigt in Seitenansicht ein teilweise geschnittenes Entladungsgefäß einer Niederdruckentladungslampe gemäß Figur 1,

Figur 3 zeigt einen Schnitt durch das Entladungsgefäß gemäß Figur 2 an der Stelle I, I'.

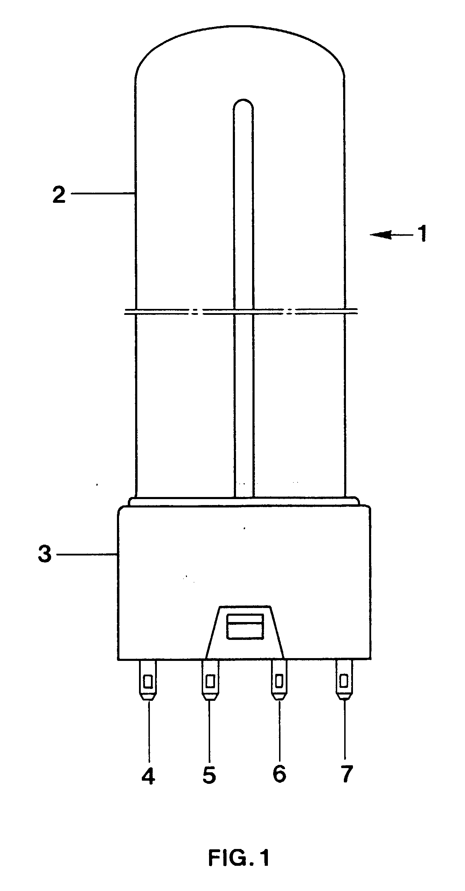

In Figur 1 ist eine kompakte Niederdruckentladungslampe 1 mit einer Leistungsaufnahme von 18 W aufgezeigt, die sich aus einem verkürzt dargestellten Entladungsgefäß 2 und einem Sockel 3 vom Typ 2 G 11 zusammensetzt. Der Sockel weist vier Anschlußstifte 4 bis 7 auf, die über die Fassungskontakte mit dem Vorschaltgerät verbunden werden.

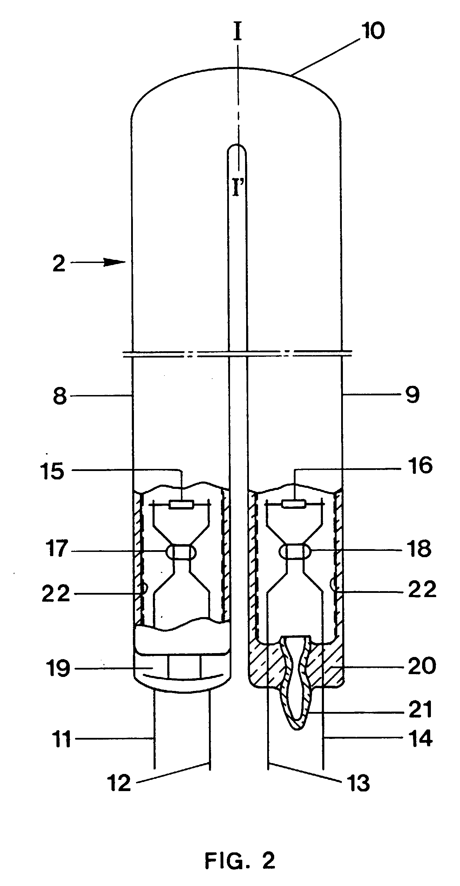

Figur 2 zeigt in verkürzter Darstellung das Entladungsgefäß 2 der Lampe aus Figur 1. Es weist eine Länge von 19,6 cm auf und setzt sich aus zwei geraden Längsrohrabschnitten 8, 9 mit kreisförmigem Querschnitt und eine: 180°-Biegung 10 zusammen. In die freien Enden der beiden Längsrohrabschnitte 8, 9 mit einem inneren Durchmesser von 15,5 mm und einer Wanddicke von 1 mm sind jeweils zwei Stromzuführungen 11, 12 bzw. 13, 14 eingequetscht. Diese Stromzuführungen 11, 12 bzw. 13, 14 tragen Elektrodenwendeln 15, 16 und werden mittels einer Glasperle 17, 18 im Innern des Gefäßes zusammengehalten. In eine 20 der beiden Quetschungen 19, 20 der Längsrohrabschnitte 8, 9 ist außerdem ein Pumpröhrchen 21 eingequetscht, das nach der Füllung des Entladungsgefäßes 2 abgeschmolzen wurde. Auf der Innenwand des Entladungsgefäßes 2 ist eine Leuchtstoffbeschichtung 22 aufgebracht.

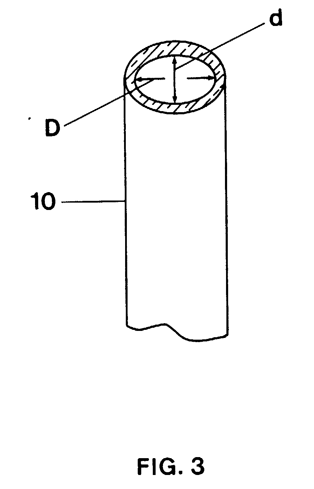

Die 180°-Biegung 10 weist einen großen Außenradius auf und verengt sich zur Scheitellinie I, I' hin. Der Innendurchmesser der Biegung besitzt am Übergang zu den Längsrohrabschnitten 8, 9 einen kreisförmigen Innenquerschnitt von 15,5 mm Durchmesser und verengt sich am Scheitel, wie aus Figur 3 ersichtlich, zu einer Ellipse mit einer großen Achse D von 15,5 mm und einer kleinen Achse d von 10 mm. Die kleine Achse d verläuft dabei in Richtung der Längsrohrabschnitte 8, 9. Die Wand des Entladungsgefäßes ist an der äusseren Mantelfläche der 180°-Biegung 10 verdickt. Sie weist an dem dem Sockel zugewandten Teil der Ellipse eine Dikke von 1 mm auf und nimmt auf dem dem Sockel abgewandten Teil der Ellipse bis auf 2 mm an der äusseren Mantellinie zu.

Die Erfindung ist nicht auf eine Niederdruckentladungslampe mit einem Entladungsgefäß aus lediglich einem U-förmigen Glasrohr beschränkt. Das Entladungsgefäß kann auch aus mehreren U-förmigen Glasrohren bestehen, wie dies z.B. in der EP-PS 0 143 419 gezeigt wird. In diesem Fall muß die 180°-Biegung jedes U-förmigen Glasrohres die erfindungsgemäßen Merkmale aufweisen, damit mit der Lampe bei niedrigen Umgebungstemperaturen eine optimale Lichtausbeute erzielt wird.

## Patentansprüche

1. Niederdruckentladungslampe (1) mit einem gewundenen, aus einem oder mehreren U-förmig gebogenen Glasrohren zusammengesetzten Entladungsgefäß (2), zwei an den Enden des Entladungsgefäßes (2) dicht eingeschmolzenen Elektroden (15, 16), einer Füllung aus Quecksilber und mindestens einem Edelgas sowie einer Leuchtstoffbeschichtung (22) auf der Innenwand des Entladungsgefäßes (2), wobei das bzw. die U-förmig gebogenen Rohre aus jeweils zwei parallel verlaufenden und an ihren freien Enden abgedichteten Längsrohrabschnitten (8, 9) mit kreisförmigem Innenquerschnitt und einer 180°-Biegung (10) bestehen, und im Falle mehrerer U-förmig gebogener Glasrohre diese parallel nebeneinander angeordnet und über eine Querverschmelzung nahe den freien Enden der Längsrohrabschnitte (8, 9) miteinander verbunden sind, dadurch gekennzeichnet, daß der Innendurchmesser der 180°-Biegung (10) sich vom Übergang des Längsrohrabschnitts (8, 9) zum Scheitel (I, I') des U-förmig gebogenen Rohres hin verkleinert und im Scheitel (I, I') einen im wesentlichen ellipsenförmigen Innenquerschnitt aufweist, wobei das Verhältnis der kleinen Achse d zur großen Achse D die Gleichung

$$0{,}6 \leq \frac{d}{D} \leq 0{,}8$$

erfüllt, die kleine Achse d in Längsrichtung der Längsrohrabschnitte (8, 9) verläuft und die große Achse D gleich dem Innendurchmesser der Längsrohrabschnitte (8, 9) ist.

2. Niederdruckentladungslampe (1) nach Anspruch 1, dadurch gekennzeichnet, daß die Wand des bzw. der U-förmig gebogenen Glasrohre im Bereich der äußeren Mantelfläche der 180°-Biegung (10) eine Dicke s aufweist, die der Ungleichung

$$1{,}5 \times w < s < 2{,}5 \times w$$

genügt, wobei w die Dicke der Wand im Bereich der Längsrohrabschnitte (8, 9) ist.

## Claims

1. Low-pressure discharge lamp (1) having a wound discharge vessel (2) assembled from one or more glass tubes bent in a U-shaped fashion, two electrodes (15, 16) sealed tightly at the ends of the discharge vessel (2), a filling made from mercury and at least one noble gas, as well as a fluorescent coating (22) on the inner wall of the discharge vessel (2), the tube or tubes bent in a U-shaped fashion comprising in each case two longitudinal tube sections (8, 9) which extend in parallel, are sealed at their free ends and have a circular inner cross-section and a 180° bend (10), and in the case of a plurality of glass tubes bent in a U-shaped fashion said tubes are arranged parallel next to one another and are connected to one another via a transverse fusion near the free ends of the longitudinal tube sections (8, 9), characterized in that the inside diameter of the 180° bend (10) decreases from the transition of the longitudinal tube section (8, 9) to the apex (I, I') of the tube bent in a U-shaped fashion, and has at the apex (I, I') an essentially elliptical inner cross-section, the ratio of the minor axis d to the major axis D satisfying the equation

$$0.6 \leq \frac{d}{D} \leq 0.8,$$

the minor axis d extending in the longitudinal direction of the longitudinal tube sections (8, 9), and the major axis D being equal to the inside diameter of the longitudinal tube sections (8, 9).

2. Low-pressure discharge lamp (1) according to Claim 1, characterized in that in the region of the outer lateral surface of the 180° bend (10) the wall of the glass tube or tubes bent in a U-shaped fashion has a thickness s which satisfies the inequality

$$1.5 \times w < s < 2.5 \times w,$$

w being the thickness of the wall in the region of the longitudinal tube sections (8, 9).

## Revendications

1. Lampe à décharge (1) à basse pression, comportant une enceinte de décharge (2) incurvée constituée d'un ou de plusieurs tubes de verre cintrés en forme de U, deux électrodes (15, 16) scellées de façon étanche sur les extrémités de l'enceinte de décharge (2), une atmosphère composée de mercure et d'au moins un gaz rare, ainsi qu'un revêtement (22) de substance fluorescente appliqué sur la paroi intérieure de l'enceinte de décharge (2), le ou les tubes de verre cintrés en forme de U étant constitués de deux sections tubulaires longitudinales (8, 9) qui s'étendent parallèlement et dont les extrémités libres sont rendues étanches, qui ont une section transversale intérieure circulaire et sont cintrées à 180° (10), et, dans le cas de plusieurs tubes de verre cintrés en forme de U, ceux-ci sont disposés parallèlement les uns à côté des autres et reliés entre eux à proximité des extrémités libres des sections tubulaires longitudinales (8, 9) par l'intermédiaire d'une scellement transversal, caractérisée par le fait que le diamètre intérieur du cintrage à 180° (10) se rétrécit à partir de la transition entre la section tubulaire longitudinale (8, 9) et le sommet (I, I') du tube cintré en forme de U, et présente au sommet (I, I') une section transversale intérieure qui a sensiblement la forme d'une ellipse, le rapport entre le petit axe d et le grand axe D correspondant à l'équation

$$0,6 \leq \frac{d}{D} \leq 0,8$$

le petit axe d s'étendant dans la direction longitudinale des sections tubulaires longitudinales (8, 9), et le grand axe D étant égal au diamètre intérieur des sections tubulaires longitudinales (8, 9).

2. Lampe à décharge (1) à basse pression selon la revendication 1, caractérisée par le fait que, dans la zone de la surface d'enveloppe extérieure du cintrage à 180° (10), la paroi du ou des tubes de verre cintrés en forme de U a une épaisseur s qui correspond à l'inéquation

$$1,5 \times w < s < 2,5 \times w$$

w étant l'épaisseur de la paroi dans la zone des sections tubulaires longitudinales (8, 9).

**FIG. 1**

FIG. 2

d

D

10

FIG. 3